# FASCICULE DE BREVET EUROPEEN

(11) **EP 1 942 040 B1**
(45) Date de publication et mention de la délivrance du brevet: **22.02.2012**
(21) Numéro de dépôt: 07291638.0
(22) Date de dépôt: 28.12.2007
(51) Int. Cl.: B61F 5/50, B60B 37/00

(54) **Manteau de protection d'essieu**
Schutzmantel für Achsen
Axle protection membrane

(30) Priorité: 05.01.2007 FR 0700057
(43) Date de publication de la demande: 09.07.2008
(73) Titulaire: Société Nationale des Chemins de Fer Français, 75014 Paris (FR); Fotia, 10170 Etrelles sur Aube (FR)
(72) Inventeur: Guenard, Thierry, 10100 Romilly Sur Seine (FR); Thouvenot, Patrice, 78711 Mantes La Ville (FR); Boccara, Claude, 100170 Etrelles (FR); Boccara née Houssin, Annick, 10170 Etrelles (FR)
(74) Mandataire: Bloch, Gérard

(56) Documents cités:
- EP-A- 1 508 455
- WO-A-00/59764
- FR-A1- 2 881 990

## Description

La présente invention concerne un manteau de protection d'essieu de véhicule ferroviaire comprenant une couche externe de blindage, relativement dure, destinée à résister aux impacts des éléments du ballast sans se fissurer, et une couche interne relativement souple d'amortissement des éventuelles déformations de la couche de blindage. La couche de blindage ne doit pas se fissurer car tout début de fissure engendrerait un risque de corrosion et d'endommagement de la surface de l'essieu.

Le document WO 00/59764 décrit un manteau de protection conforme au préambule de la revendication 1.

Le brevet FR2881990 montre un autre exemple d'un manteau de protection. Ce manteau comporte comme couche de blindage, une couche de mastic butyle. Et comme le butyle est un matériau très collant qui serait difficile d'enlever du corps d'essieu s'il était directement appliqué dessus, sans couche interne, il a été proposé, dans le brevet FR2881990, de doubler cette couche de blindage d'une couche interne plus facile à enlever de l'essieu, en l'espèce une couche d'aluminium revêtue d'une colle vinylique ou acrylique à titre de composé adhésif.

Même si la couche d'aluminium enduite de colle est plus facile à enlever, il n'en reste pas moins que retirer, sans le détériorer, le manteau de cet art antérieur du corps d'essieu n'est pas évident. En fait, ce manteau avait été proposé pour les essieux de trains à grande vitesse qui sont des essieux creux ou forés. De ce fait, le caractère presque fixe du revêtement n'est pas réellement ici un inconvénient, le contrôle des essieux pouvant s'effectuer de l'intérieur sans avoir à enlever leur manteau. Par ailleurs, ce même document de l'art antérieur propose d'appliquer le manteau par recouvrement et collage de ses bords, qui doivent être à cet effet maintenus l'un contre l'autre pendant une durée relativement longue.

Bref, le manteau du brevet FR2881990, sans parler de son prix de revient, est de mise en oeuvre assez lourde et d'application pratiquement limitée aux essieux forés.

C'est pourquoi la demanderesse a cherché à développer un manteau de protection mieux adapté et plus universel.

Ainsi, l'invention concerne un manteau de protection d'essieu de véhicule ferroviaire selon la revendication 1.

Le manteau de protection de l'invention est donc un manteau que l'on peut facilement retirer et remettre à volonté sur l'essieu pour en vérifier visuellement la surface extérieure.

Dans une forme de réalisation particulière, le manteau retirable de l'invention est enveloppé d'un film d'aluminium enroulé sur lui-même le long de l'un de ses bords.

Le manteau est donc avantageusement protégé contre la corrosion.

De préférence, la couche externe de blindage est choisie dans le groupe comprenant le polyuréthane, des silicones, le caoutchouc, le polyisobutylène et le polybutadiène.

De préférence encore, la couche interne d'amortissement est en élastomère.

De préférence toujours, les bords de fermeture de la couche externe du manteau comportent des épaulements pour recevoir la bande de fermeture et former avec elle une fermeture aggripante.

Le manteau se referme avantageusement sur le corps d'essieu sans ajout de matière adhésive et de manière rapide.

L'invention sera mieux comprise à l'aide de la description suivante en référence au dessin annexé sur lequel :
la figure 1 représente un essieu à deux roues sans manteau de protection ;
la figure 2 représente une vue en coupe du manteau de protection selon l'invention;
la figure 3 représente une vue en coupe du manteau selon l'invention fermé par une bande de fixation et disposé sur le corps d'essieu de la figure 1 et
la figure 4 représente une vue en perspective d'une partie du manteau de l'invention autour de ses bords de fermeture.

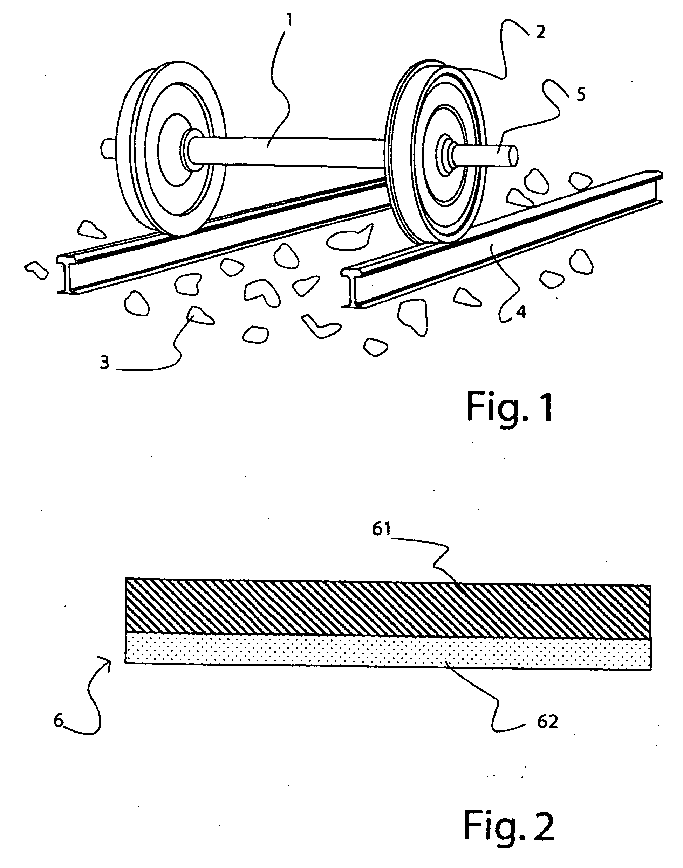

En référence à la figure 1, dans un véhicule ferroviaire, un essieu 1 se présente sous la forme d'un arbre cylindrique placé transversalement sous une caisse du véhicule, voiture, wagon ou locomotive, supportant des roues 2 situées à ses extrémités et fixées par des fusées 5. Lors de l'exploitation de l'essieu 1, les roues 2 sont en contact avec des rails 4 disposés sur une surface de réception de ballast 3.

On appelle ballast le lit de pierres ou de graviers qui s'étend sur un chemin sur lequel repose des rails. Son rôle est de transmettre les efforts engendrés par le passage des trains au sol, sans que celui-ci ne se déforme par tassement. Le rôle du ballast est aussi d'enchâsser les rails afin d'assurer une résistance aux déformations longitudinales.

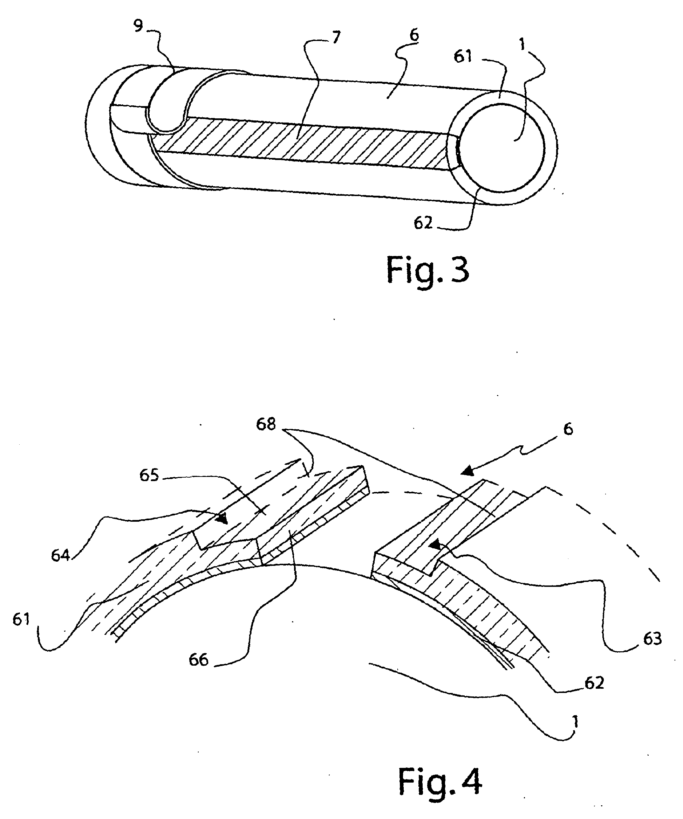

En référence aux figures 2 et 3, l'essieu 1 est ici protégé par un manteau 6 contre les impacts de ballast 3. Le manteau est constitué de deux couches 61,62 superposées, une couche externe de blindage 61 et une couche interne 62 d'amortissement des déformations de la couche externe de blindage 61.

C'est la première couche d'amortissement 62 du manteau 6 qui recouvre l'essieu 1 en enveloppant sa surface longitudinale. Cette couche 62 est constituée d'un revêtement souple ici en élastomère de polyuréthane agencé pour adhérer à l'essieu tout en pouvant être retiré.

L'essieu 1 est ici recouvert d'une peinture anti-corrosion, la couche interne 62 s'accrochant bien à la peinture.

La couche d'amortissement 62 possède ici une dureté « Shore A » comprise entre 44 et 46 et un allongement minimal de 300%. Cet élastomère possède également une bonne tenue à l'eau, la couche élastomère 62 formant aussi une barrière anti-corrosion.

La couche d'amortissement 62 est elle recouverte par une couche de blindage 61 afin d'absorber l'énergie résultant des impacts de ballast 3.

La couche de blindage 61 est ici réalisée en élastomère de polyuréthane. Cependant, des silicones, le caoutchouc, le polyisobutylène et le polybutadiène conviendraient également.

Le polyuréthane peut comprendre des matières de charges choisies parmi des morceaux de caoutchouc, des fibres comme les fibres de verre et/ou des billes comme les billes de verre. Ces matières de charges comme notamment les morceaux de caoutchouc permettent d'améliorer les propriétés « anti-ballasts » de la couche en élastomère. Les morceaux de caoutchouc peuvent se présenter sous formes de matériaux concassés d'une granulométrie pouvant varier par exemple de 1 à 6 mm. Les matières de charges comme les fibres de verre permettent de conférer une résistance mécanique à la couche d'élastomère évitant ainsi que cette couche ne se déchire. Les matières de charges peuvent être présentes en une quantité comprise entre 10% et 60% en poids par rapport au poids total de la couche de polyuréthane.

Les deux couches 61,62 sont solidaires l'une de l'autre et forment une enveloppe cylindrique. En référence à la figure 4, le manteau 6 est ouvert dans sa longueur. Les bords de fermeture 63, 64 de la couche externe 61 sont échancrés pour former un épaulement 68 dont la partie 65 parallèle est recouverte d'une matière adhésive, et ici d'une structure de fixation par bande agrippante technique à crochet.

Lors de la mise en place du manteau 6 sur le corps d'essieu 1, les bords de fermeture 63, 64 sont rapprochés, les surfaces radiales d'extrémité 66 de ces bords étant respectivement mises en contact l'une avec l'autre. Une fois le manteau 6 disposé en enveloppe, le corps d'essieu 1 n'est plus visible.

Une bande aggripante 7 est déposée longitudinalement dans les deux épaulements 68 des bords de fermeture 63,64 afin d'empêcher le manteau 6 de s'ouvrir et de se détacher du corps d'essieu 1. La bande aggripante 7 comprend sur la face en contact avec les surfaces 65 une structure adhésive ici de crochets ou de boucles pour coopérer et former la fermeture aggripante.

L'épaisseur de la bande 7 est choisie pour correspondre à la profondeur des épaulements 68. Le manteau 6, fixé avec la bande 7 sur l'essieu 1, possède ainsi une surface extérieure sans relief.

Pour faciliter la mise en place du manteau 6 et plus particulièrement de la bande agrippante 7, on peut abouter les bords de fermeture 63,64 et les maintenir par des bandes autocollantes circonférentielles, non représentées, apposées sur la couche de blindage 61.

Lors de l'application de la bande aggripante 7, on dépose une extrémité de la bande 7 sur les bords de fermeture 63,64 à une extrémité de l'essieu 1. On enlève ensuite les bandes autocollantes une à une tout en appliquant longitudinalement la bande aggripante 7.

Le manteau 6 est tendu lorsque la bande 7 est déposée ce qui assure une bonne adhérence du manteau 6 sur la surface de l'essieu 1.

Afin de rendre imperméable le manteau 6 et ainsi empêcher la corrosion, le manteau 6, fermé par la bande aggripante 7, est enveloppé d'un film d'aluminium adhésif 9. En référence à la figure 3, le film d'aluminium 9 recouvre la surface externe du manteau 6 en partant d'une extrémité de l'essieu 1. Plusieurs couches d'aluminium 9 peuvent être déposées les unes sur les autres afin de garantir une bonne protection.

Lorsque l'essieu 1 comporte des freins à disques situés à proximité des roues 2, un premier manteau est disposé entre les freins, un deuxième sur les parties latérales situées entre les roues et les freins à disque.

Lorsque l'essieu 1 est protégé, il est monté sous une caisse d'un wagon ou d'une locomotive ferroviaire. Lors de son exploitation, le manteau subit de nombreux chocs causés principalement par des éléments de ballast 3.

Si un élément de ballast heurte la couche de blindage 61, la plus grande partie de l'énergie est arrêtée par la couche de blindage 61, la couche d'absorption 62 limitant la déformation de la couche de blindage 61 lors du choc. Dans un exemple de mise en oeuvre, le manteau présente une tenue aux impacts jusqu'à une énergie de 34 joules entre -25°C et +80°C et une tenue à un double impact jusqu'à une énergie de 26 joules.

Les essieux 1 sont contrôlés périodiquement par contrôles non destructifs vis-à-vis de la corrosion et de la résistance mécanique. Ce contrôle est réalisé à l'aide d'un appareil de mesure par ultrasons, par magnétoscopie ou à l'oeil nu en retirant le manteau 6.

En cas de détection d'un défaut par magnétoscopie ou par mesure par ultrasons, la procédure de contrôle impose de vérifier à l'oeil nu la nature du défaut et donc requiert également de retirer le manteau 6.

La conception du manteau de protection 6 sans matière collante permet de le retirer de manière simple et rapide, le manteau 6 pouvant être réutilisé à la suite du contrôle. Pour retirer le manteau 6, le film d'aluminium 9 est enlevé et la bande aggripante 7 retirée. On peut ainsi ouvrir le manteau 6, le retirer et observer l'essieu.

L'essieu 1 est réparé à nu, le manteau 6 étant refermé par la suite en suivant la procédure décrite précédemment. Un nouveau film d'aluminium 9 est déposé sur le manteau 6 refermé. Le manteau 6 est ainsi réutilisé ce qui permet de réaliser des économies et procure un gain de temps lors du contrôle des essieux.

## Revendications

1. Manteau de protection d'essieu (1) de véhicule ferroviaire, comprenant une couche externe de blindage (61) et une couche interne (62) d'amortissement des déformations de la couche externe de blindage (61), et la couche externe (61) s'étend d'un côté de la couche interne (62) dont l'autre côté à appliquer sur l'essieu (1) est nu **caractérisé par le fait que** la couche externe (61) comporte deux bords de fermeture (63,64) agencés pour recevoir une bande (7) de fermeture du manteau (6) agencée pour maintenir les surfaces radiales d'extrémité (66) des bords (63, 64) en contact l'une à l'autre.

2. Manteau de protection selon la revendication 1, enveloppé d'un film d'aluminium (9) enroulé sur lui-même le long de l'un de ses bords.

3. Manteau de protection selon l'une des revendications 1 à 2, dans lequel la couche externe de blindage (61) est en élastomère.

4. Manteau de protection selon la revendication 3, dans lequel la couche externe de blindage (61) est choisie dans le groupe comprenant le polyuréthane, des silicones, le caoutchouc, le polyisobutylène et le polybutadiène.

5. Manteau de protection selon l'une des revendications 1 à 4, dans lequel la couche interne d'amortissement (62) est en élastomère.

6. Manteau de protection selon l'une des revendications 1 à 5, dans lequel les bords de fermeture (63,64) de la couche externe (61) du manteau (6) comportent des épaulements (68) pour recevoir la bande de fermeture (7) et former avec elle une fermeture aggripante.

7. Manteau de protection selon l'une des revendications 1 à 6, dans lequel la couche de blindage (61) comprend des matières de charge choisies parmi des morceaux de caoutchouc, des fibres de verre et des billes de verre.

## Claims

1. Protective mantle for the axle (1) of a rail vehicle, comprising an external armouring layer (61) and an internal layer (62) for damping any deformations of the external armouring layer (61), and the external layer (61) extends on one side of the internal layer (62), the other side of which, to be applied to the axle (1), is bare, **characterised by** the fact that the external layer (61) comprises two closure edges (63, 64) arranged so as to receive a band (7) for closing the mantle (6), arranged to hold the radial end surfaces (66) of the edges (63, 64) in contact with each other.

2. Protective mantle according to claim 1, enveloped in an aluminium film (9) wound on itself along one of the edges thereof.

3. Protective mantle according to one of claims 1 to 2, in which the external armouring layer (61) is made from elastomer.

4. Protective mantle according to claim 3, in which the external armouring layer (61) is chosen from the group comprising polyurethane, silicones, rubber, polyisobutylene and polybutadiene.

5. Protective mantle according to one of claims 1 to 4, in which the internal damping layer (62) is made from elastomer.

6. Protective mantle according to one of claims 1 to 5, in which the closure edges (63, 64) of the external layer (61) of the mantle (6) comprise shoulders (68) for receiving the closure band (7) and forming a gripping closure with it.

7. Protective mantle according to one of claims 1 to 6, in which the armouring layer (61) comprises filling materials chosen from pieces of rubber, glass fibres and glass balls.

## Patentansprüche

1. Schutzmantel für Achsen (1) eines Schienenfahrzeugs, umfassend eine externe Abschirmungsschicht (61) und eine interne Schicht (62) zur Dämpfung der Verformungen der externen Abschirmungsschicht (61), und wobei sich die externe Schicht (61) von einer Seite der internen Schicht (62) erstreckt, wobei das andere Ende, das auf die Achse (1) aufgebracht werden soll, freigelegt ist, **dadurch gekennzeichnet, dass** die externe Schicht (61) zwei Schließkanten (63, 64) aufweist, die angeordnet sind, um einen Streifen (7) zum Verschluss des Mantels (6) aufzunehmen, angeordnet, um die Endflächen (66) der Kanten (63, 64) in Kontakt miteinander zu halten.

2. Schutzmantel nach Anspruch 1, umhüllt von einem Aluminiumfilm (9), der auf sich selbst entlang einer seiner Kanten aufgerollt ist.

3. Schutzmantel nach einem der Ansprüche 1 bis 2, wobei die externe Abschirmungsschicht (61) aus Elastomer ist.

4. Schutzmantel nach Anspruch 3, wobei die externe Abschirmungsschicht (61) aus der Gruppe, bestehend aus Polyurethan, Silikonen, Gummi, Polyisobutylen und Polybutadien gewählt ist.

5. Schutzmantel nach einem der Ansprüche 1 bis 4, wobei die interne Dämpfungsschicht (62) aus Elastomer ist.

6. Schutzmantel nach einem der Ansprüche 1 bis 5, wobei die Schließkanten (63, 64) der externen Schicht (61) des Mantels (6) Absätze (68) umfassen, um den Verschlussstreifen (7) aufzunehmen und damit einen eingreifenden Verschluss zu bilden.

7. Schutzmantel nach einem der Ansprüche 1 bis 6, wobei die Abschirmungsschicht (61) Füllmaterialien umfasst, die unter Gummistücken, Glasfasern und Glasperlen ausgewählt sind.
